# EUROPÄISCHE PATENTSCHRIFT

(11) **EP 0 168 783 B1**
(45) Veröffentlichungstag und Bekanntmachung des Hinweises auf die Patenterteilung: **15.06.1994**
(21) Anmeldenummer: 85108676.9
(22) Anmeldetag: 11.07.1985
(51) Int. Cl.: B01D 61/24, B01D 67/00, A61M 1/18

(54) **Asymmetrische mikroporöse Hohlfaser für die Hämodialyse sowie Verfahren zu ihrer Herstellung**
Asymmetric microporous hollow fibre, especially for hemodialysis, and process for making it
Fibre creuse microporeuse asymétrique en particulier pour l'hémodialyse et procédé pour sa préparation

(30) Priorität: 17.07.1984 DE 3426331
(43) Veröffentlichungstag der Anmeldung: 22.01.1986
(73) Patentinhaber: Fresenius AG, 61350 Bad Homburg (DE)
(72) Erfinder: Heilmann, Klaus, D-6680 Neunkirchen (DE)
(74) Vertreter: Luderschmidt, Wolfgang, Dr. Dipl.-Chem.

(56) Entgegenhaltungen:
- DE-A- 3 138 525
- DE-A- 3 149 976
- US-A- 4 051 300

## Beschreibung

Die Erfindung betrifft eine asymmetrische semipermeable Hohlfasermembran gemäß dem Oberbegriff des Anspruchs 1.

Aus der US-A- 36 15 024 sind asymmetrische Hohlfasern bekannt, die ausschließlich aus einem hydrophoben Polymer hergestellt sind. Infolgedessen sind diese Hohlfasern nicht mehr mit Wasser benetzbar, mit der Folge, daß sie entweder nicht vollständig getrocknet werden dürfen oder aber mit einer hydrophilen Flüssigkeit beispielsweise Glycerin, gefüllt werden müssen. So nimmt die Ultrafiltrationsrate von Wasser nach jedem Trocknen immer weiter kontinuierlich ab, da die kleinen Poren im steigenden Maße mit Luft gefüllt werden und somit nicht mehr mit Wasser benetzbar sind. Dies hat zur Folge, daß die Trenngrenze nach jedem Trocknungsvorgang verschoben wird und nicht konstant bleibt.

Des weiteren ist die in dieser US-A beschriebene Faser aus hydrophoben Polymeren nicht ausreichend stabil und weist eine relativ schlechte Streckgrenze auf, mit der Folge, daß die so hergestellten Fasern sich nur schlecht weiterverarbeiten lassen. Im übrigen schrumpft diese Faser nach dem Trocknen und besitzt keine feinporige Struktur, sondern vielmehr eine grobporige Fingerstruktur mit großen Vakuolen, die die Stabilität der Faser - wie vorstehend bereits angedeutet - herabsetzen.

Infolgedessen ist die aus dieser US-A bekannte Faser nicht für Hämodialysezwecke einsetzbar, da sie aufgrund ihres Aufbaues und ihrer hydrophoben Eigenschaften weder in einfacher Weise weiterverarbeitet werden kann noch ohne spezielle Vorbehandlung bei der Hämodialyse eingesetzt werden kann.

Die US-A- 36 91 068 beschreibt eine für die Dialyse einsetzbare Membran, die jedoch lediglich eine Fortentwicklung der Membran gemäß vorstehender US-PS darstellt.

Die gemäß US-A- 36 15 024 erhaltene Faser wird einem Trocknungsprozeß unterzogen, um nahezu vollständig das restliche Wasser zu entfernen, das in dieser Faser bei der Herstellung zurückgeblieben ist. Dies führt dazu, daß - wie bereits vorstehend erwähnt - die kleinen Poren mit Luft gefüllt werden und somit nicht mehr für die Benetzung durch Wasser zur Verfügung stehen. Es bleiben lediglich die großen Poren für das zu ultrafiltrierende Wasser übrig, mit der Folge, daß insgesamt die Ultrafiltrationsrate sinkt und die Trenngrenze der Membran verschoben wird. Im übrigen gelten für diese Membran, soweit deren mechanische Eigenschaften und deren Verarbeitbarkeit betroffen sind, die vorstehenden Ausführungen.

Die US-PS 40 51 300 beschreibt eine synthetische Hohlfaser, die für technische Zwecke (Umkehrosmose u.dgl.), nicht jedoch für die Hämodialyse eingesetzt werden kann. Diese Faser wird aus einem hydrophoben Polymer hergestellt, dem in bestimmten Mengen ein hydrophiler polymerer Porenbildner zugesetzt wird. Diese Faser besitzt infolge ihres Einsatzzwecks einen Berstdruck von 2000 psi (42,2 kg/cm²), der durch die Herstellungsweise und die Faserstruktur vorgegeben ist. Infolgedessen kann diese Faser zwar erfolgreich bei der Umkehrosmose eingesetzt werden, eignet sich jedoch nicht für die Hämodialyse, bei der völlig andere Einsatzbedingungen gelten. Hier kommt es im wesentlichen darauf an, daß die hergestellte Membran einen hohen Siebkoeffizienten und eine ebenfalls hohe Diffusivität aufweist. Diese Parameter sind jedoch bei einer gemäß US-A- 40 51 300 hergestellten Membran nicht zufriedenstellend, so daß diese Membran nicht für die Hämodialyse einsetzbar ist.

Die DE-A- 29 17 357 betrifft eine semipermeable Membran, die u.a. aus einem Polysulfon hergestellt werden kann. Diese Faser weist sowohl eine Innenhaut als auch eine Außenhaut auf, wodurch die hydraulische Permeabilität wesentlich erniedrigt wird. Des weiteren gelten für diese Membran infolge ihrer hydrophoben Struktur die eingangs erläuterten Ausführungen.

Schließlich betrifft die DE-A- 31 49 976 eine makroporöse hydrophile Membran aus einem synthetischen Polymerisat, beispielsweise Polysulfon, mit einem Gehalt an Polyvinylpyrrolidon (PVP). Dabei soll der PVP-Gehalt wenigstens 15 Gew.% betragen und die Membran ein Wasseraufnahmevermögen von wenigstens 11 Gew.% aufweisen.

Aufgrund des hohen Restgehaltes extrahierbarer Substanzen eignet sich diese Faser, was auch aus ihrer Struktur und ihrem hohen Wasseraufnahmevermögen herzuleiten ist, für industrielle, nicht jedoch für medizinische Zwecke.

Wie bereits vorstehend erläutert, werden die Hohlfasern des Standes der Technik üblicherweise zur industriellen Abtrennung von Wasser, beispielsweise zur Umkehrosmose oder Ultrafiltration, oder zu Gastrennungen eingesetzt.

Erfindungsgemäß soll jedoch die Hohlfaser zur Hämodialyse eingesetzt werden, bei der besondere Bedingungen zu beachten sind.

Die Eigenschaften derartiger hohlfaserartiger Membranen werden durch die Art des Verfahrens und der bei diesen Verfahren eingesetzten Polymere bestimmt. Dennoch ist es äußerst schwierig, die richtige Wahl der Ausgangsprodukte und eine entsprechende Verfahrensführung gezielt einzusetzen, damit eine bestimmte Faser, also eine Faser mit bestimmten Membraneigenschaften, erreicht wird. Zu diesen gewünschten Eigenschaften gehören:
a) eine hohe hydraulische Permeabilität gegenüber dem zu ultrafiltrierenden Lösungsmittel. Das zu ultrafiltrierende Fluid, insbesondere Wasser, soll dabei möglichst gut, d.h. mit hohen Raten/Membranoberflächenbereich/Zeit bei geringen Drücken durch die Membran hindurchdringen. Dabei hängt die Permeabilitätsrate von der Zahl und der Größe der Poren sowie deren Länge, der Benetzbarkeit mit der Flüssigkeit usw. ab. Insofern ist also erstrebt, eine Membran mit möglichst vielen Poren einheitlicher Größe und möglichst geringer Dicke zur Verfügung zu stellen.
b) Weiterhin soll die Membran eine scharfe Trenncharakteristik aufweisen, d.h. sie soll eine möglichst einheitliche Porengrößenverteilung aufweisen, um eine Trenngrenze gegenüber Molekülen bestimmter Größe, also eines bestimmten Molekulargewichts darzustellen. Bei der Hämodialyse soll insbesondere die Membran etwa die gleichen Eigenschaften wie die Niere eines Menschen aufweisen, also Moleküle zurückweisen, die eine Molekulargewicht von 45.000 und darüber aufweisen.
c) Des weiteren soll die Membran eine gute mechanische Stabilität gegenüber den auftretenden Drücken und eine hervorragende Beständigkeit aufweisen.
   Diese mechanische Stabilität ist regelmäßig umgekehrt proportional zur hydraulischen Permeabilität, d.h. je besser die hydraulische Permeabilität wird, desto schlechter wird die mechanische Beständigkeit einer Membran. Zu diesem Zweck werden die eingangs beschriebenen asymmetrischen Membranen an ihrer Trenn- oder Barrierenschicht mit einer Stützmembran versehen, die einerseits die mechanisch wenig belastbare Trennmembran abstützt und andererseits praktisch die hydraulischen Eigenschaften infolge der erheblich größeren Poren unbeeinflußt läßt. Bei diesen asymmetrischen Kapillarmembranen ist allerdings das Stützgerüst häufig so großporig, daß der Reduzierung der Dicke der Barrierenschicht enge Grenzen gesetzt sind, d.h. die Trenneigenschaften, insbesondere die hydraulische Permeabilität, haben bisher nicht den optimalen Wert erreicht.
d) Weiterhin ist bei den für die Hämodialyse eingesetzten Membranen insbesondere der Faktor "Biokompatibilität" von wesentlicher Bedeutung. Unter diesem Faktor oder der biologischen Verträglichkeit versteht man in der Dialysepraxis das Nichtansprechen des körpereigenen Abwehrsystems auf Oberflächen, wie Blutschlauchsysteme, Konnektoren,Gehäusematerial, Vergußmasse und Dialysemembranen.
   Dieses Ansprechen kann sich in einem initialen Abfall der Leukozytenzahl (Leukopenie) und des Sauerstoffpartialdrucks (pO₂) gefolgt von einem langsamen Wiederanstieg und einer Aktivierung des Komplementsystems äußern.
   Derartige Reaktionen sind bei Verwendung von regenerierter Cellulose als Dialysemembran beschrieben worden. Die Intensität dieser Reaktion ist abhängig von der Größe der aktiven Oberfläche.

Der Erfindung liegt daher die Aufgabe zugrunde, die Hohlfasermembran der eingangs erwähnten Art so fortzubilden, daß sie eine ausgezeichnete Benetzbarkeit bei einem möglichst geringen Gehalt an extrahierbaren Substanzen, eine sehr gute hydraulische Permeabilität bei guter mechanischer Stabilität und eine hervorragende Biokompatibilität aufweist.

Diese Aufgabe wird durch die kennzeichnenden Merkmale des Anspruches 1 gelöst.

Die erfindungsgemäße Hohlfaser weist gegenüber den bekannten Hohlfasern zunächst den Vorteil auf, daß sie eine sehr hohe hydraulische Permeabilität besitzt. So weist die nach dem erfindungsgemäßen Verfahren hergestellte Hohlfasermembran gegenüber einer vergleichbaren Hohlfasermembran aus regenerierter Cellulose eine hydraulische Permeabilität auf, die wenigstens um den Faktor 10 erhöht ist.

Weiterhin ist die nach dem erfindungsgemäßen Verfahren hergestellte Hohlfasermembran in biologischer Hinsicht ausgezeichnet verträglich. Sie verursacht nahezu keine Leukopenie.

Aufgrund der guten Biokompatibilität kann weiterhin die zu verabreichende Heparinmenge gesenkt werden.

Schließlich tritt auch keine Apoxie auf, d.h. der Sauerstoffpartialdruck fällt innerhalb der Fehlergrenzen nicht ab. Demzufolge wird mit dem erfindungsgemäßen Verfahren eine Hohlfasermembran erhalten, die im Vergleich zu den marktgängigen Hohlfasermembranen, die für Hämodialysezwecke eingesetzt werden, eine erheblich bessere Biokompatibilität und ein verbessertes hydraulisches Verhalten aufweist.

Für das erfindungsgemäße Verfahren können synthetische Polymere eingesetzt werden, die eine gute Löslichkeit in polaren, aprotischen Lösungsmitteln aufweisen und aus diesen unter Bildung vom Membranen ausgefällt werden können. Sie sollen beim Ausfällen insbesondere zu einer asymmetrischen, anisotropen Membran führen, die auf der einen Seite eine hautartige mikroporöse Sperrschicht (Barrierenschicht) aufweist und auf der anderen Seite eine Stützmembran besitzt, die zur Verbesserung der mechanischen Eigenschaften dieser Sperrschicht vorgesehen ist, nicht jedoch die hydraulische Permeabilität beeinflußt.

Als membranbildende erste Polymere lassen sich die folgenden Polymere einsetzen:
Polysulfone, wie Polyethersulfone, insbesondere polymere aromatische Polysulfone, die die in nachstehenden Formeln I und II wiederkehrenden Einheiten 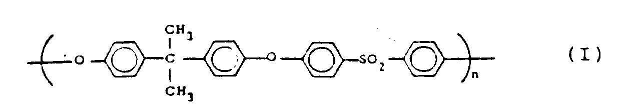 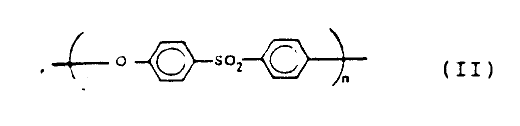
enthalten.

Aus der Formel I ist ersichtlich, daß das Polysulfon Alkylgruppen, insbesondere Methylgruppen in der Kette enthält , während das Polyethersulfon gemäß Formel II lediglich Arylgruppen aufweist, die durch eine Etherbindung bzw. eine Sulfonbindung miteinander verkettet sind.

Derartige Polysulfone bzw. Polyethersulfone, wobei diese Polymere unter dem Begriff Polyarylsulfone zusammengefaßt werden, sind an sich bekannt und werden unter dem Warenzeichen "Udel" von Union Carbide Corporation hergestellt und vertrieben. Sie können allein oder im Gemisch eingesetzt werden.

Weiterhin sind einsetzbar Polycarbonate, bei denen lineare Polyester von Carbonsäuren vorliegen, die beispielsweise unter dem Warenzeichen "Lexan" von General Electric Corp. vertrieben werden.

Des weiteren sind Polyamide einsetzbar, d.h. Polyhexamethylenadipamide, die beispielsweise unter dem Warenzeichen "Nomex" von Dupont Inc. vertrieben werden.

Daneben sind weitere Polymere einsetzbar, beispielsweise PVC,modifizierte Acrylsäuren sowie halogenierte Polymere, Polyether, Polyurethane und deren Copolymere.

Bevorzugt ist der Einsatz von Polyarylsulfonen, insbesondere von Polysulfonen.

Als hydrophiles zweites Polymer lassen sich langkettige hydrophile Polymere einsetzen, die über wiederkehrende polymere Einheiten verfügen, die an sich hydrophil sind.

Zu diesen hydrophilen zweiten Polymeren gehört das Polyvinylpyrrolidon (PVP), das für medizinische Zwecke in einer Vielzahl von Anwendungen, beispielsweise als Plasmaexpander, eingesetzt wird. Das PVP besteht aus wiederkehrenden Einheiten der allgemeinen Formel III, 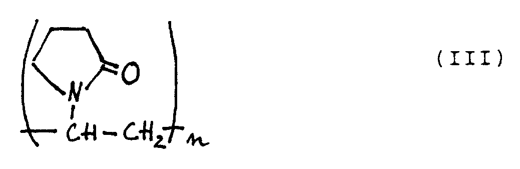
in der n eine ganze Zahl von 90 - 4400 darstellt.

PVP wird durch Polymerisation von N-Vinyl-2-Pyrrolidon hergestellt, wobei der Polymerisationsgrad n von der Art des Polymerisationsverfahrens abhängt. So können PVP-Produkte mit einem mittleren Molekulargewicht von 10.000 - 450.000 produziert und auch für die erfindungsgemäßen Zwecke eingesetzt werden. Derartige Polyvinylpyrrolidone werden unter der Produkttype K-15 bis K-90 von GAF Corp. und unter dem Warenzeichen "Kollidon" von Bayer AG vertrieben.

Als weitere hydrophile zweite Polymere können eingesetzt werden Polyethylenglycol sowie Polyglycolmonoester und die Copolymere von Polyethylenglycolen mit Polypropylenglycol, beispielsweise die Polymere, die unter dem Warenzeichen "Pluronic" F 68, F 88, F 108 und F 127 von der BASF AG vertrieben werden.

Weiterhin können Polysorbate eingesetzt werden, beispielsweise Polyoxyethylensorbitanmonooleat, -monolaurat oder -monopalmitat. Derartige Polysorbate sind beispielsweise unter dem Warenzeichen "Tween" am Markt erhältlich, wobei die hydrophilen "Tween"-Produkte, beispielsweise "Tween" 20, 40 und dgl. besonders einsetzbar sind.

Schließlich können wasserlösliche Cellulosederivate, beispielsweise Carboxymethylcellusose, Celluloseacetat und dgl., sowie Stärke und Derivate hiervon eingesetzt werden.

Bevorzugt ist der Einsatz von PVP.

Als polares, aprotisches Lösungsmittel werden generell solche Lösungsmittel eingesetzt, die die ersten Polymere gut lösen können, d.h. daß wenigstens eine etwa 20 Gew.%ige Lösung des synthetischen Polymers erhalten werden kann. Zu derartigen aprotischen Lösungsmitteln gehören Dimethylformamid (DMF), Dimethylsulfoxid (DMSO), Dimethylacetamid (DMA), N-Methylpyrrolidon und deren Gemische. Diese aprotischen Lösungsmittel sind in beliebigen Mischungsverhältnissen mit Wasser mischbar und können infolgedessen aus der Faser nach deren Fällung mit Wasser ausgewaschen werden. Neben den reinen polaren, aprotischen Lösungsmitteln sind jedoch aber auch Gemische untereinander sowie mit Wasser einsetzbar, wobei die obere Löslichkeitsgrenze von wenigstens etwa 20 Gew.% für das faserbildende Polymerisat zu beachten ist. Vorteilhafterweise kann ein geringer Zusatz von Wasser die Fällbedingungen verbessern.

Das erste Polymer wird in dem aprotischen Lösungsmittel in einer Menge von etwa 12 - 20, vorzugsweise 14 - 18, insbesondere etwa 16 Gew. % bezogen auf die zu fällende Lösung bei Raumtemperatur gelöst, wobei in Verbindung mit dem hydrophilen Polymer die nachstehend angegebenen Viskositätsbedingungen zu beachten sind. Es hat sich herausgestellt, daß bei einem faserbildenden Polymergehalt in dem Lösungsmittel unter etwa 12 Gew.% die gebildeten Hohlfasern keine ausreichende Festigkeit mehr aufweisen, d.h. sich nicht mehr ohne erhebliche Schwierigkeiten weiterverarbeiten bzw. einsetzen lassen. Andererseits wird die Faser bei einem mehr als 20 Gew.%igen Anteil des faserbildenden Polymers in der Lösung zu dicht, so daß hierunter die hydraulischen Eigenschaften leiden.

Um die Porenbildung zu verbessern bzw. überhaupt zu ermöglichen, weist eine derartige, das faserbildende Polymer in den obigen Bestandteilen aufweisende Lösung eine bestimmte Menge eines hydrophilen, zweiten Polymers auf, das bei der Fällung bzw. Koagulierung des überwiegend hydrophoben faserbildenden Polymers die gewünschten Poren erzeugt. Vorteilhafterweise wird - wie vorstehend erläutert - das zweite Polymer in einer Menge von etwa 2 - 10, vorzugsweise 2,5 - 8 Gew.% bezogen auf die zu fällende Lösung eingesetzt, wobei die angegebenen Viskositätsgrenzen für die Zusammensetzung der Lösung zu beachten sind. Vorteilhafterweise verbleibt ein bestimmter Anteil dieses wasserlöslichen Polymers in der gefällten Hohlfaser, so daß die Benetzung der Hohlfaser hierdurch erleichtert wird. Demgemäß enthält die fertige Hohlfaser noch einen Anteil an dem zweiten Polymer von 1 - 10 Gew.%, insbesondere etwa 5 - 8 Gew.%, bezogen auf das Gewicht der polymeren Membran.

Erfindungsgemäß soll die das faserbildende Polymer und das zweite Polymer enthaltende Lösung eine Viskosität von 500 - 3 000, vorzugsweise 1 500 - 2 500 cps (Centipoise) bei 20°C,
also bei Raumtemperatur, aufweisen. Diese Viskositätswerte wurden mit einem üblichen Rotationsviskosimeter, beispielsweise mit einem Haake-Viskosimeter, bestimmt. Der Grad der Viskosität, also insbesondere die innere Zähigkeit der Lösung, ist einer der wesentlichen Parameter bei der Durchführung des erfindungsgemäßen Verfahrens. Die Viskosität soll dabei einerseits die Struktur des extrudierten hohlfadenartigen Gebildes bis zur Fällung aufrechterhalten und andererseits jedoch noch die Fällung, also die Koagulierung des Hohlfadens nach Zuführung der Fällflüssigkeit zu der extrudierten zähen Lösung, bei der vorteilhafterweise DMSO, DMA oder ein Gemisch der beiden als Lösungsmittel eingesetzt wird, nicht behindern. Es hat sich dabei herausgestellt, daß die Einhaltung des vorstehend genannten Viskositätsbereichs zu Hohlfadenmembranen führt, die ausgezeichnete hydraulische und mechanische Eigenschaften aufweisen.

Die fertige, klare Lösung, die vollständig von nichtgelösten Partikeln durch Filtration befreit ist, wird anschließend der nachstehend beschriebenen Extrusions- oder Fälldüse zugeführt.

Es wird üblicherweise eine Fälldüse eingesetzt, die im wesentlichen derjenigen entspricht, die in der US-PS 36 91 068 beschrieben ist. Diese Düse besteht aus einem Ringkanal, der in seinem Durchmesser dem Außendurchmesser des Hohlfadens entspricht. Koaxial hierzu ragt in diesen Kanal ein Düseninnenkörper und durchsetzt diesen Kanal. Dabei entspricht der Außendurchmesser dieses Körpers im wesentlichen dem Innendurchmesser des Hohlfadens, also dem Durchmesser des Lumens des Hohlfadens. Durch diesen hohlen Körper wird das nachstehend erläuterte Fällmedium hindurchgepumpt, das an der Spitze austritt und mit dem hohlfadenartigen Gebilde, bestehend aus der extrudierten Flüssigkeit, zusammentrifft. Im übrigen wird auf die Beschreibung der US-PS 36 91 068 Bezug genommen, soweit dies die Herstellung des Hohlfadens betrifft.

Das Fällmedium besteht aus einem der vorstehend genannten aprotischen Lösungsmittel in Verbindung mit einem bestimmten Anteil Nichtlösungsmittel, vorzugsweise Wasser, das die Fällung des faserbildenden ersten Polymers auslöst, andererseits das zweite Polymer jedoch löst. Vorteilhafterweise entspricht das im Fällmittel eingesetzte aprotische Lösungsmittel/- gemisch dem Lösungsmittel, das zur Herstellung der das faserbildende Polymer enthaltenden Lösung eingesetzt worden ist. Bei der Zusammensetzung des Fällmediums aus einem organischen, aprotischen Lösungsmittel/- gemisch und Nichtlösungsmittel ist zu berücksichtigen, daß mit zunehmendem Nichtlösungsmittelgehalt die Fälleigenschaften des Fällmediums schärfer werden, mit der Folge, daß die gebildete Porengröße der Membran immer kleiner wird. Dementsprechend kann durch die Wahl eines bestimmten Fällmediums die Porencharakteristik der Trennmembran bestimmt werden. Andererseits muß jedoch das Fällmedium noch einen bestimmten Nichtlösungsmittelgehalt, etwa wenigstens 35 Gew.% aufweisen, um eine Fällung noch im gewünschten Maß durchführen zu können. Dabei muß generell berücksichtigt werden, daß sich das Fällmedium mit dem Lösungsmittel der die Polymerisate enthaltenden Lösung vermischt, so daß mit zunehmender Entfernung von der Innenoberfläche des Hohlfadens der Wassergehalt im aprotischen Lösungsmittel abnimmt. Da der Faden selbst jedoch vor dem Auftreffen in der Waschflüssigkeit durchgefällt sein soll, sind dem minimalen Wassergehalt der Fällflüssigkeit die vorstehenden Grenzen gesetzt.

Bei geringem Nichtlösungsmittelgehalt, z.B. einem Gehalt von etwa 25 Gew.%, wird eine grobporige Membran erhalten, die z.B. als Plasmafilter eingesetzt wird, also lediglich relativ große Bestandteile des Bluts, wie Erythrozyten, zurückhält.

Weiterhin ist die Menge des zugeführten Fällmediums zur Polymerlösung ein ebenfalls für die Durchführung des erfindungsgemäßen Verfahrens wichtiger Parameter. Dieses Verhältnis wird im wesentlichen durch die Abmessungen der Fälldüse, also des fertigen Hohlfadens, bestimmt, dessen Abmessungen sich beim Fällen gegenüber dem extrudierten, nicht gefällten Hohlfadengebilde vorteilhafterweise nicht ändert. Dementsprechend können die Verhältnisse der eingesetzten Volumina von Fällmedium und Polymerlösung in einem Bereich von 1 : 0,5 bis 1 : 1,25 liegen, wobei diese Volumenverhältnisse bei gleicher Austrittsgeschwindigkeit der Fällflüssigkeit und der Polymerlösung, was vorteilhafterweise der Fall ist, den Flächenverhältnissen der Hohlfaser entsprechen, also der von der polymeren Substanz gebildeten Ringfläche einerseits und der Fläche des Hohlkanals andererseits.

Vorteilhafterweise führt man dem extrudierten Gebilde unmittelbar hinter der Düse soviel Fällmedium zu, daß der Innendurchmesser des extrudierten, jedoch noch nicht gefällten Gebildes im wesentlichen den Abmessungen der Ringdüse entspricht, aus der die zu extrudierende Masse ausgetrieben wird.

Vorteilhafterweise beträgt der Außendurchmesser der Hohlfaser etwa 0,1 - 0,3 mm, während die Dicke der Membran etwa 10 - 100, vorzugsweise 15 - 50, insbesondere etwa 40 »m betragen kann. Wie bereits eingangs erwähnt, entspricht das Fällverfahren in etwa dem Fällverfahren gemäß der DE-AS 22 36 226, so daß auf deren Beschreibung Bezug genommen wird. Somit wird also eine asymmetrische Kapillarmembran dadurch gebildet, daß das Fällmedium von innen nach außen die Polymerlösung nach dem Austritt aus der Fälldüse fällt. Die Fällung ist erfindungsgemäß im wesentlichen abgeschlossen, bevor die Hohlfaser die Oberfläche eines Spülbades erreicht, das die in der Hohlfaser enthaltene organische Flüssigkeit herauslöst und endgültig die Faserstruktur fixiert.

Beim Fällen wird zunächst die Innenoberfläche des faserartigen Gebildes koaguliert, wobei eine dichte mikroporöse Membranschicht in Form einer Barriere für Moleküle gebildet wird, die größer als 30.000 - 40.000 Dalton sind.

Mit zunehmendem Abstand von dieser Barriere hin erfolgt eine Verdünnung der Fällflüssigkeit mit dem in der Spinnmasse enthaltenen Lösungsmittel, mit der Folge, daß die Fälleigenschaften von innen nach außen weniger scharf werden. Dies hat zur Folge, daß sich nach außen hin eine grobporige, schwammartige Struktur bildet, die als Stützschicht für die innenliegende Membran dient.

Bei der Fällung wird der überwiegende Teil des zweiten Polymers aus der Spinnmasse gelöst, während der kleinere Teil in der koagulierten Faser nichtextrahierbar zurückbleibt. Dieses Herauslösen des zweiten Polymer erleichtert die Porenbildung. Vorteilhafterweise wird der überwiegende Teil des zweiten Polymer aus der Spinnmasse herausgelöst, während der Rest - wie bereits vorstehend erläutert - in der koagulierten Faser zurückbleibt.

Üblicherweise wird eine Herauslösung des zweiten Polymer aus der Spinnmasse von 60 - 95 Gew.% erstrebt, d.h. in der Faser bleibt lediglich 40 - 5 Gew.% des eingesetzten zweiten Polymer zurück. Besonders bevorzugt bleibt in der fertiggestellten Faser weniger als 30 Gew.% des ursprünglich eingesetzten zweiten Polymer zurück. Die fertige Faser enthält 90 - 99, vorzugsweise 95 - 98 Gew.%, erstes Polymer, Rest zweites Polymer.

Wie bereits erwähnt, wird das PVP bei der Fälloperation aus der Spinnmasse herausgelöst und bleibt im gelösten Zustand in der Fällflüssigkeit, was wiederum die Fällbedingungen mit beeinflußt, da die Lösungseigenschaften des zweiten Polymer in die Gesamtcharakteristik des Fällmaterials eingeht. Demgemäß bestimmt also auch das zweite Polymer zusammen mit den Lösungsmittelbestandteilen des Fällmediums die Fällreaktion.

Anzumerken ist, daß vorteilhafterweise ohne Düsenverzug gearbeitet wird. "Düsenverzug" bedeutet, daß die Austrittsgeschwindigkeit des faserartigen Gebildes aus der Ringdüse und die Abziehgeschwindigkeit des gefällten Fadens nicht übereinstimmen, wobei üblicherweise die Abziehgeschwindigkeit größer ist. Dies führt zu einer Reckung des Gebildes beim Austritt aus der Ringdüse und hat bei der Fällreaktion zur Folge, daß die gebildeten Poren in Abziehrichtung gezogen und somit bleibend verformt werden. Es wurde dabei festgestellt, daß bei einer mit Düsenverzug hergestellten Faser die Ultrafiltrationsrate erheblich geringer ist als bei einer Faser, die ohne Düsenverzug hergestellt wurde. Insofern ist es erfindungsgemäß bevorzugt, daß die Austrittsgeschwindigkeit der Spinnmasse aus der Düse und die Abzugsgeschwindigkeit der erzeugten Faser im wesentlichen übereinstimmen. Daher kommt es also vorteilhafterweise nicht zu einer Verformung der in der Faser gebildeten Poren noch zu einer Verengung des Innenkanals oder zu einer Verminderung der Wandstärke der Faser.

Auch der Abstand der Düse von der Oberfläche des Fällbades ist von Bedeutung, da hierdurch bei gegebener Fallgeschwindigkeit, d.h. Austrittsgeschwindigkeit, der Hohlfaser aus der Düse, die Fällzeit gegeben ist. Allerdings ist die Fallhöhe beschränkt, da das Gewicht der Faser einen bestimmten Grenzwert aufweist, bei dem das noch nicht gefällte hohlfadenartige Gebilde abreißt. Dieser Abstand ist abhängig von der Viskosität, dem Gewicht und der Fällgeschwindigkeit des Fadens. Vorteilhafterweise beträgt der Abstand der Düse von dem Fällbad nicht mehr als etwa 1 m.

Nach dem Fällen erfolgt die Spülung der koagulierten Faser in einem Bad, das üblicherweise Wasser enthält. In diesem Spülbad verbleibt die Hohlfaser zur Herausspülung der gelösten organischen Bestandteile und zur Fixierung ihrer mikroporösen Struktur bis zu etwa 30 Min., insbesondere etwa 10 - 20 Min.

Anschließend wird die Faser durch eine heiße Trockenzone geführt.

Danach wird die Faser vorteilhafterweise noch texturiert, um die Austauscheigenschaften der Faser zu verbessern.

Hierauf schließt sich die übliche Behandlung der so hergestellten Hohlfaser, also das Wickeln auf eine Spule, das Zurechtschneiden der Fasern in eine gewünschte Länge und die Verarbeitung der zugeschnittenen Faserbündel zu Dialysatoren an.

Die nach dem erfindungsgemäßen Verfahren hergestellte Faser weist auf ihrer Innenoberfläche eine mikroporöse Sperrschicht auf, die etwa eine Dicke von 0,1 - 2 »m aufweist. An diese Sperrschicht schließt sich nach außen hin eine schaumartige Stützstruktur an, die sich signifikant von den lamellenartigen Stützstrukturen des Standes der Technik unterscheidet.

Im übrigen entsprechen die Abmessungen der so hergestellten Faser den vorstehend angegebenen Werten.

Die erfindungsgemäß hergestellte semipermeable Membran hat eine Wasserdurchlässigkeit von 22,5 - 450 ml/hm² x mbar, insbesondere etwa 150 - 300 ml/hm² x mbar.

Weiterhin weist die erfindungsgemäß hergestellte Hohlfaser eine Wasseraufnahmefähigkeit von 3 - 10, insbesondere etwa 6 - 8 Gew.% auf. Unter "Wasseraufnahmefähigkeit" ist derjenige Parameter zu verstehen, der auf folgende Weise bei der erfindungsgemäßen Hohlfaser bestimmt wird.

Mit Wasserdampf gesättigte Luft führt man bei Raumtemperatur (25 °C) durch einen Dialysator, der die erfindungsgemäßen Hohlfasern im trockenen Zustand aufweist. Dabei wird Druckluft in ein Wasserbad eingeleitet und nach dem Sättigen mit Wasserdampf dem Dialysator zugeführt. Der Wert der Wasseraufnahmefähigkeit wird dann gemessen, wenn Gewichtskonstanz erreicht ist.

Die Clearence-Daten wurden an den erfindungsgemäßen Fasern bei 1,25 m² aktiver Oberfläche gemäß DIN 58 352 ermittelt. Bei einem Blutfluß von jeweils 300 ml/min liegt die Clearence für Harnstoff zwischen 200 und 290, üblicherweise bei 270, für Kreatinin und Phosphat zwischen 200 und 250, üblicherweise bei etwa 230, für Vitamin B₁₂ zwischen 110 und 150, üblicherweise bei 140 und für Inulin zwischen 50 und 120, üblicherweise bei 90 ml/min.

Weiterhin weist die erfindungsgemäße Membran eine hervorragende Trenngrenze auf. Die ermittelten Siebkoeffizienten liegen für B₁₂ bei 1,0, für Inulin bei etwa 0,99, für Myoglobin zwischen 0,5 und 0,6 sowie für Humanalbumin unter 0,005. Somit entspricht die erfindungsgemäß hergestellte Faser in ihren Trenneigenschaften (dem Siebkoeffizienten) nahezu vollständig der natürlichen Niere.

Weitere Vorteile, Ausführungsformen und Einzelheiten sind aus der nachfolgenden Beschreibung von Ausführungsbeispielen unter Bezugnahme auf die Zeichnung ersichtlich.

Es zeigen:
- Fig. 1: ein stark vergrößerter Ausschnitt eines Schnitts durch die Wand einer Hohlfaser,
- Fig. 2: eine graphische Darstellung der Abhängigkeit der Clearence vom Blutfluß der erfindungsgemäßen Hohlfaser,
- Fig. 3: ein Eliminationsdiagramm für Moleküle unterschiedlichen Molekulargewichts in Abhängigkeit vom Blutfluß,
- Fig. 4: ein Ultrafiltrationsdiagramm, bei dem die Abhängigkeit des Filtratflusses vom Transmembrandruck gezeigt ist,
- Fig. 5: ein Diagramm, bei dem der Filtratfluß in Abhängigkeit vom Hämatokrit gezeigt ist,
- Fig. 6: ein Diagramm, bei dem der Filtratfluß in Abhängigkeit vom Proteingehalt gezeigt ist,
- Fig. 7: eine graphische Darstellung, bei der die Clearence-Daten für Harnstoff, Kreatinin und Phosphat gezeigt sind, und
- Fig. 8: die Abhängigkeit des Siebkoeffizienten von Molekülen unterschiedlichen Molekulargewichts.

Die Beispiele erläutern die Erfindung. Soweit nicht anders angegeben, beziehen sich Prozentangaben auf das Gewicht.

### Beispiel 1

Es wird eine Spinn- oder Polymerlösung hergestellt, die 15 Gew.% Polysulfon, 9 Gew.% PVP (MG:40.000), 30 Gew.% DMA, 45 Gew.% DMSO und 1 Gew.% Wasser enthält. Diese Lösung wird von nichtgelösten Partikeln befreit.

Danach wird die hergestellte Lösung in eine Fälldüse eingeführt, in die zugleich als Fällmedium ein Gemisch aus 40 Gew.% Wasser und 60 Gew.% 1:1 DMA/DMSO von 40 °C eingeführt wird.

Die Ringdüse hat einen Außendurchmesser von etwa 0,3 mm und einen Innendurchmesser von etwa 0,2 mm und entspricht damit im wesentlichen der Geometrie des Hohlfadens.

Es wird ein Hohlfaden erhalten, der auf der Innenoberfläche eine mikroporöse Sperrschicht von etwa 0,1 »m aufweist, an die sich eine offenporige, schaumartige Struktur anschließt.

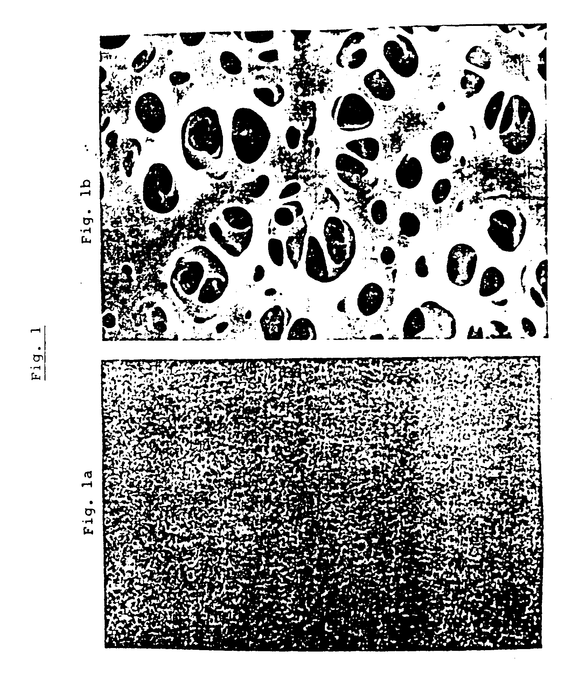

In der Fig. 1 sind stark vergrößerte Ausschnitte der erhaltenen Membran gezeigt, wobei in Fig. 1a die innere Oberfläche (Sperrschicht) in 10.000facher Vergrößerung und in Fig. 1b die Außenoberfläche in 4.500facher Vergrößerung dargestellt sind.

Diese Membran weist im übrigen noch einen Restgehalt an PVP auf und ist somit durch Wasser ausgezeichnet benetzbar.

### Beispiel 2

Die gemäß Beispiel 1 hergestellte Membran wird auf ihre Permeabilität gegenüber Wasser untersucht. Es wird festgestellt, daß gegenüber Wasser die Permeabilität sehr hoch ist und für diese Membran einen Wert von etwa 157,5 ml/hm² x mbar aufweist.

Für Blut ist der UF-Koeffizient jedoch geringer, da sich wie bei allen synthetischen Membranen, jedoch aber wesentlich geringer, eine sogen. Sekundärmembran bildet, die die hydraulischen Eigenschaften vermindert. Diese Sekundärmembran besteht üblicherweise aus Proteinen und Lipoproteinen, deren Gesamtkonzentration im Blut die filtrierbare Menge beeinflußt und die Strömung durch die Kapillare behindert.

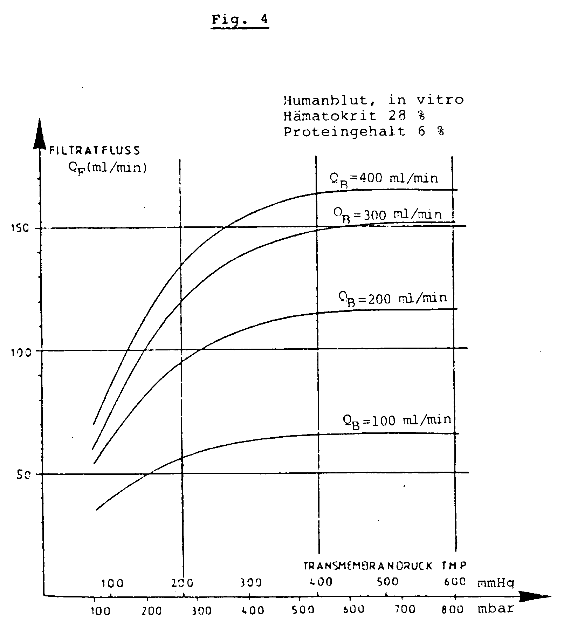

Die Ultrafiltrationskoeffizienten werden nach dem Verfahren bestimmt, das in Int. Artif. Organ. 1982, S. 23 - 26, abgedruckt ist. Die Ergebnisse sind in Fig. 4 dargestellt.

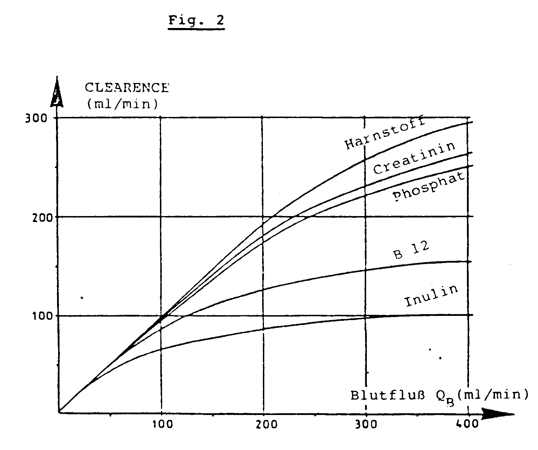

Die Clearance-Daten wurden im Labor mit wässrigen Lösungen gem. DIN 58352 aufgenommen (Inulin mit Humanplasma). Dabei ergaben sich die in der Fig. 2 angegebenen Beziehungen zwischen Clearance und Blutfluß (ohne Filtrationsanteil).

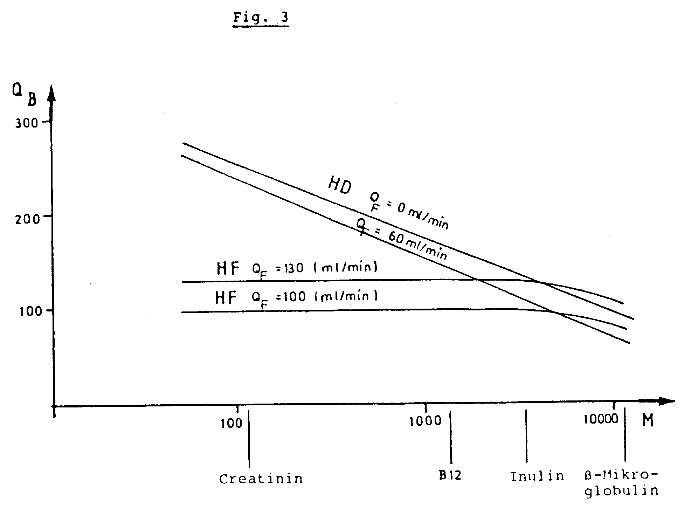

Bei einem Blutfluß von 300 ml/min läßt sich das folgende Eliminationsdiagramm ableiten, das bei einem zusätzlichen Filtratfluß von 60 ml/min (HDF-Behandlung) erhöht ist. Zum Vergleich ist außerdem das reine Filtrationsdiagramm für Q_{B} = 300 ml/min und Q_{F} = 100 ml/min sowie für Q_{B} = 400 ml/min und Q_{F} = 130 ml/min eingezeichnet (Fig. 3).

Erst bei Molekülen mit Molekulargewichten oberhalb des Inulins ist die Elimination bei HF (Hämofiltration) größer als bei HD (Hämodialyse) mit der nach dem erfindungsgemäßen Verfahren hergestellten Faser.

Der beim Vorlegen eines konstanten Blutflusses erreichbare Filtratfluß ist in Abhängigkeit vom eingesetzten TMP (Transmembrandruck) in der Fig. 4 angegeben.

Aus dieser Fig. 4 ist ersichtlich, daß sich der Filtratfluß mit steigendem TMP solange erhöht, bis ein maximales Niveau erreicht ist. Die dann vorliegende Eindickung des Bluts ist derart stark, daß ein weiterer TMP-Anstieg keine weitere Filtratleistung mehr bringt.

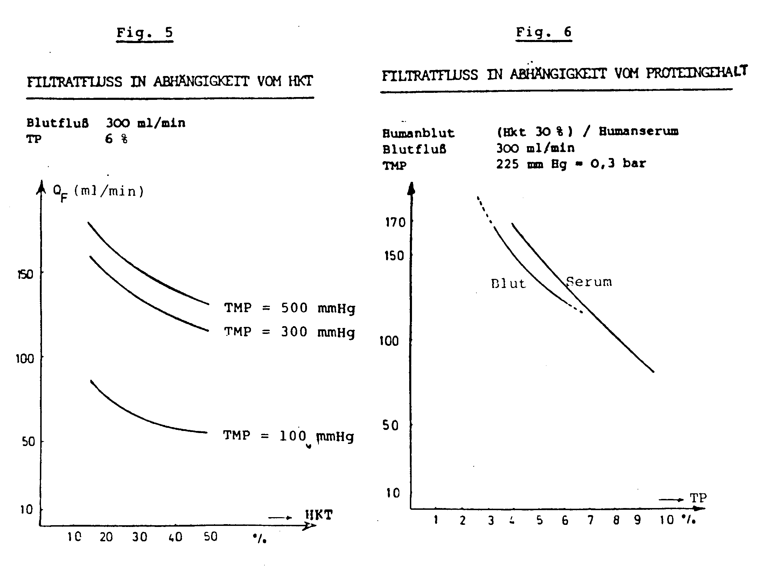

Bei Abweichungen von den angegebenen Werten (Hämatokrit 28 % und Proteingehalt 6 %) werden diese Niveaus schon bei kleinerem TMP (bei höheren Blutwerten) bzw. erst bei höherem TMP (bei kleineren Blutwerten) erreicht. Wieviel dies in der Praxis ausmachen kann, ist in Fig. 5 und 6 gezeigt.

Dabei zeigt Fig. 5 den Filtratfluß in Abhängigkeit vom Hämatokrit und Fig. 6 die Abhängigkeit vom Filtratfluß in Abhängigkeit vom Proteingehalt bei der nach dem erfindungsgemäßen Verfahren hergestellten Hohlfaser.

Bei einem Blutfluß von 300 ml/min und einem Filtratfluß von 150 ml/min erhöht sich - wie aus den Figuren ersichtlich - der Hämatokritwert und die Gesamtproteinmenge von 28 % bzw. 6 % (arteriell) auf 56 % bzw. 12 % (venös).

### Beispiel 3

Die gemäß Beispiel 1 hergestellte Faser zeigt bei in-vivo-Einsatz ausgezeichnete Eigenschaften.

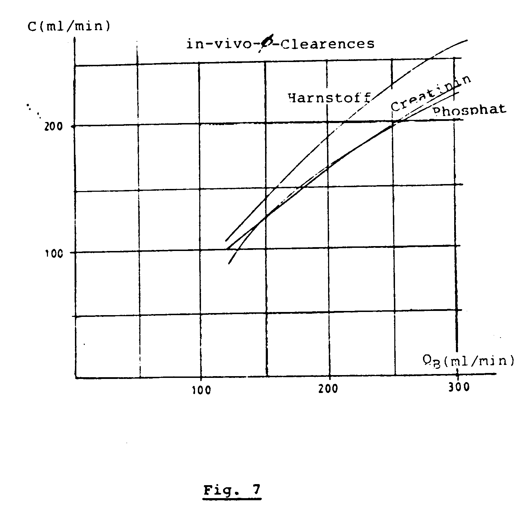

So ist in Fig. 7 dargestellt, welche Clearances die nach dem erfindungsgemäßen Verfahren hergestellte Faser für Harnstoff, Creatinin und Phosphat besitzt.

Bei Erhöhung des Filtratflusses von 0 ml/min auf 50 ml/min beträgt die Zunahme an Clearance bei Q_{B} = 200 ml/min für

| | |
|---|---|
| Harnstoff | 2 %, |
| Creatinin | 3 %, |
| Phosphat | 4 %, |
| Inulin | 8 %, |
| β-Mikroglobulin | 40 %. |

Eine Zunahme der Gesamtclearance durch zusätzliche Filtration ist nur dann sinnvoll, wenn die zu eliminierenden Stoffe höhere Molekulargewichte aufweisen als die traditionellen "Mittelmoleküle".

Auch die Stabilität der Clearance über die Behandlungsdauer wurde von verschiedenen Zentren untersucht. Dies ist aus nachstehender Tabelle I ersichtlich.

**Tabelle I**

| Beispiel Zentrum A | | | Beispiel Zentrum B | |
|---|---|---|---|---|
| | t = 20 Minuten | t = 90 Minuten | Beginn HD | Ende HD |
| Clearance Harnstoff | 261 | 269 | 148 | 133 |
| | 260 | 271 | 163 | 149 |
| | 261 | 265 | 140 | 137 |
| | 245 | 252 | 168 | 171 |
| | 282 | 267 | 168 | 127 |
| | 277 | 266 | 184 | 133 |
| | 275 | 268 | 182 | 148 |
| | 0̸± 266 ± 13 | 265 ± 6 | 165 ± 16 | 143 ± 15 |
| Clearance Creatinin | 222 | 219 | 137 | 140 |
| | 225 | 223 | 164 | 155 |
| | 231 | 232 | 133 | 145 |
| | 235 | 260 | 142 | 156 |
| | 269 | 257 | 150 | 141 |
| | 239 | 242 | 152 | 138 |
| | 214 | 233 | 137 | 166 |
| | 0̸± 234 ± 18 | 238 ± 16 | 145 ± 11 | 149 ± 10 |
| Clearance Phospat | | | 118 | 132 |
| | | | 154 | 150 |
| | | | 137 | 143 |
| | | | 146 | 105 |
| | | | 141 | 114 |
| | | | 124 | 150 |
| | | | 166 | 156 |
| | | | 141 ± 17 | 136 ± 20 |
| 0̸ = Mittelwert | | | | |

Hieraus ist ersichtlich, daß die Clearance über die Behandlungsdauer praktisch konstant ist, wobei die aufgezeigten Unterschiede innerhalb der üblichen Fehlerabweichungen liegen.

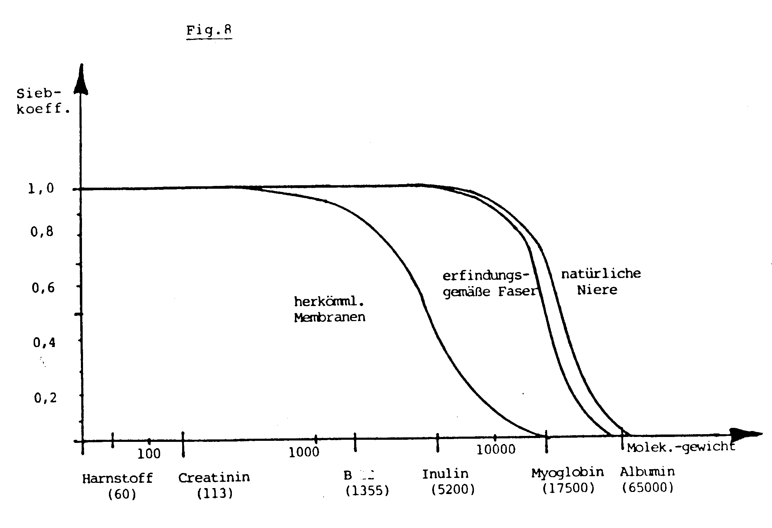

Schließlich ist noch in Fig. 8 die Abhängigkeit des Siebkoeffizienten gegenüber dem Molekulargewicht gezeigt. Hieraus ist ersichtlich, daß die nach den erfindungsgemäßen Verfahren hergestellte Faser nahezu in ihrem Verhalten mit der natürlichen Niere übereinstimmt und wesentlich besser ist als herkömmliche Membranen.

## Patentansprüche

1. Asymmetrische, semipermeable mit Wasser benetzbare Hohlfasermembran, insbesondere für die Hämodialyse, bestehend aus einem organischen hydrophoben ersten Polymerisat und einem hydrophilen zweiten Polymerisat, gekennzeichnet durch:
- einen Gehalt von 90-99 Gew.-% erstem Polymerisat und 10-1 Gew.-% zweitem Polymerisat, wobei die Summe der Polymerisate 100 Gew.-% beträgt,
- eine innenliegende poröse Membrantrennschicht von 0,1 - 2 »m Dicke, einer Ausschlußgrenze für Moleküle mit Molekulargewicht zwischen 30 000 und 40 000 Dalton und einer diese Trennschicht umfassenden, offenporigen, schaumartigen Stützstruktur, und
- eine hydraulische Permeabilitat von 22,5 - 450 ml/h x m² x mbar und eine Wasseraufnahmefähigkeit im getrockneten Zustand von 3-10 Gew.-%.

2. Hohlfasermembran nach Anspruch 1, gekennzeichnet durch:
- eine Clearance entsprechend DIN 58 352 von 200-290 ml/min für Harnstoff, 200-250 ml/min für Kreatinin und Phosphat, 110-150 ml/min für Vitamin B₁₂ und 50-120 ml/min für Inulin bei einem Blutfluß von 300 ml/min und 1,25 m² aktiver Membranoberfläche, und
- Siebkoeffizienten von 1,0 für Vitamin B₁₂, etwa 0,99 für Inulin, 0,5-0,6 für Myoglobin und unter 0,005 für Humanalbumin.

3. Hohlfasermembran nach Anspruch 1 und 2, dadurch gekennzeichnet, daß sie eine Wasseraufnahmefähigkeit im getrockneten Zustand von 6-8 Gew.-% aufweist.

4. Hohlfasermembran nach einem der Ansprüche 1-3, dadurch gekennzeichnet, daß sie eine Clearance entsprechend DIN 58 352 bei einer Blutflußgeschwindigkeit von 300 ml/min für Harnstoff, von etwa 270 ml/min, für Kreatinin und Phosphat von etwa 230 ml/min, für Vitamin B₁₂ von etwa 140 ml/min und für Inulin von etwa 90 ml/min aufweist.

5. Hohlfasermembran nach einem der Ansprüche 1-4, dadurch gekennzeichnet, daß das hydrophobe erste Polymer ein Polyarylsulfon, Polycarbonat, Polyamid, Polyvinylchlorid, ein modifiziertes Acrylsäurepolymer, ein Polyether, ein Polyurethan oder ein Copolymeres hiervon ist.

6. Hohlfasermembran nach Anspruch 5, dadurch gekennzeichnet, daß das Polyarylsulfon Polysulfon und/oder Polyethersulfon ist.

7. Hohlfasermembran nach einem der Ansprüche 1-6, dadurch gekennzeichnet, daß das zweite Polymerisat ein Polyvinylpyrrolidon, ein Polyethylenglykol, ein Polyglykolmonoester, ein Copolymer von Polyethylenglykol mit Polypropylenglykol, ein wasserlösliches Derivat der Zellulose oder ein Polysorbat ist.

8. Hohlfasermembran nach Anspruch 7, dadurch gekennzeichnet, daß das zweite Polymer Polyvinylpyrrolidon ist.

9. Hohlfasermembran nach Anspruch 8, dadurch gekennzeichnet, daß das Polyvinylpyrrolidon ein Molekulargewicht von 10 000 - 450 000 aufweist.

10. Verfahren zur Herstellung einer asymmetrischen, semipermeablen Hohlfasermembran für die Hämodialyse gemäß Anspruch 1-9 unter Verwendung eines organischen hydrophoben ersten Polymerisats und eines hydrophilen zweiten Polymerisats, dadurch gekennzeichnet, daß eine Polymerlösung aus 12-20 Gew.-% erstem Polymerisat und 2-10 Gew.-% zweitem Polymerisat, Rest polares aprotisches Lösungsmittel, bei einer Viskosität im Bereich von 500 - 3000 cps, vorzugsweise 1500 - 2500 cps, durch eine Ringdüse extrudiert wird, gleichzeitig in das Extrudat ein Fällmittel bestehend aus dem Lösungsmittel für das faserbildende erste Polymer und mindestens 35 Gew.-% Nichtlösungsmittel für das faserbildende Polymer eingeführt wird, wobei das Volumenverhältnis von austretendem Fällmedium und Extrudat dem Verhältnis von der Querschnittsfläche des Hohlkanals zur Querschnittsfläche der Polymerlösung am Düsenkopf entspricht, das Extrudat vor Auftreffen auf der Waschflüssigkeit von dem Fällmedium von innen nach außen völlig durchgefällt wird, und dann der vom Fällmedium herausgelöste Teil des zweiten Polymers und das Lösungsmittel der Polymerlösung in der Waschflüssigkeit ausgewaschen und die gebildete Hohlfaser anschließend getrocknet wird.

11. Verfahren nach Anspruch 10, dadurch gekennzeichnet, daß als Lösungsmittel Dimethylacetamid, Dimethylformamid, Dimethylsulfoxid, N-Methylpyrrolidon oder ein Gemisch derselben eingesetzt werden.

12. Verfahren nach Anspruch 10 und 11, dadurch gekennzeichnet, daß die Verhältnisse der eingesetzen Volumina von Fällmedium und Spinnlösung in einem Bereich von 1:0,5 - 1:1,25 liegen.

13. Verfahren nach Anspruch 10-12, dadurch gekennzeichnet, daß die Austrittsgeschwindigkeit des Extrudats aus der Ringdüse und die Abziehgeschwindigkeit der ausgefällten Hohlfaser übereinstimmen.

14. Verfahren nach den Ansprüchen 10-13, dadurch gekennzeichnet, daß dem polaren, aprotischen Lösungsmittel bzw. dem Lösungsmittelgemisch geringe Wasserzusätze beigemischt werden.

## Claims

1. An asymmetric, semipermeable water-wettable hollow fibre membrane, in particular for hemodialysis, comprising an organic hydrophobic first polymer and hydrophilic second polymer, characterized by:
- an amount of 90-99% by weight of said first polymer and 10-1% by weight of said second polymer, wherein the sum of the polymers amounts to 100% by weight,
- an interior porous membrane separation layer having a thickness of 0.1-2»m, an exclusion limit for molecules of the molecular weight between 30 000 and 40 000 and an open-porous, foam-like supporting structure surrounding said separation layer, and
- a hydraulic permeability of 22.5-450 ml/h x m² x mbar and a water absorption capacity of 3-10% by weight in dry state.

2. A hollow fibre membrane according to claim 1, characterized by:
- a clearance according to DIN 58352 of 200-290 ml/min with respect to urea, 200-250 ml/min with respect to creatinine and phosphate, 110-150 ml/min with respect to vitamin B₁₂ and 50-120 ml/min for inulin whilst the blood flow rate amounts to 300 ml/min and the reactive membrane surface to 1,25 m ², and
- a sieve coefficient of 1.0 with respect to vitamin B₁₂, about 0.99 with respect to inulin, 0.5-0.6 with respect to myoglobin and less than 0.0005 with respect to human albumin.

3. A hollow fibre membrane according to claims 1 and 2, characterized in that it reveals a water absorption capacity of 6-8% by weight in dry state.

4. A hollow fibre membrane according to anyone of claims 1-3, characterized in that, while having a blood flow rate of 300 ml/min, it reveals a clearance according to DIN 58352 of about 270 ml/min with respect to urea, about 230 ml/min with respect to creatinine and phosphate, about 140 ml/min with respect to vitamin B₁₂ and about 90 ml/min with respect to inulin.

5. A hollow fibre membrane according to anyone of claims 1-4, characterized in that the hydrophobic first polymer is polyarylsulfone, polycarborate, polyamide, polyvinylchloride, a modified polymer of acrylic acid, a polyether, a polyurethane or a copolymer thereof.

6. Hollow fibre membrane according to claim 5, characterized in that the polyarylsulfone is polysulfone and/or polyethersulfone.

7. A hollow fibre membrane according to anyone of claims 1-6, characterized in that the second polymer is polyvinylpyrrolidone, polyethyleneglycol, a polyglycolmonoester, a copolymer of polyethyleneglycol with polypropyleneglycol, a water soluble derivative of cellulose or a polysorbate.

8. A hollow fibre membrane according to claim 7, characterized in that the second polymer is polyvinylpyrrolidone.

9. A hollow fibre membrane according to claim 8, characterized in that the polyvinylpyrrolidone has a molecular weight of 10 000-450 000.

10. A method for producing an asymmetric, semipermeable hollow fibre membrane for hemodialysis according to claims 1-9 by using an organic hydrophobic first polymer and a hydrophilic second polymer, characterized in that a polymer solution consisting of 12-20% by weight of the first polymer and 10-2% by weight of the second polymer, rest polar aprotic solvent, is extruded at a viscosity in the range of 500-3000 cps, preferably 1500-2500 cps, through a ring spinnerette, a precipitation agent consisting of a solvent with respect to the fibre forming first polymer and at least 35% by weight of an non-solvent with respect to the fibre forming polymer is concurrently introduced into the extrudate, wherein the volume ratio of the extruded precipitation medium and the extrudate corresponds to the ratio of the cross-sectional area of the hollow channel to the cross-sectional area of the polymer solution at the nozzle head, the extrudate being totally precipitated by the precipitation medium from the interior in the direction to the exterior prior to reaching the rinsing bath, and that portion of said second polymer which is dissolved out by the precipitation medium and the solvent of the polymer solution is then washed out in the rinsing bath and the thus formed hollow fibre is subsequently dried.

11. A method according to claim 10, characterized in that dimethylacetamide, dimethylformamide, dimethylsulfoxide, N-methylpyrrolidone or a mixture thereof are utilized as the solvent.

12. A method according to claims 10 and 11, characterized in that the ratios of the inserted volumina of the precipitation medium and spinning solution lie in the range of 1:0.5-1:1.25.

13. A method according to claims 10-12, characterized in that the velocity of the extrusion from the ring spinnerette corresponds to the pulling velocity of the precipitated hollow fibre.

14. A method according to claims 10-13, characterized in that minor water additaments are admixed to the polar aprotic solvent or to the solvent mixture, respectively.

## Revendications

1. Membrane de fibres creuses asymétriques, semi-perméable, susceptible d'être mouillée avec de l'eau, en particulier pour l'hémodialyse, contenant un premier polymère organique hydrophobe et un second polymère hydrophile, caractérisée par :
- une teneur de 90 à 99% en poids du premier polymère et 10 à 1% en poids du second polymère, la somme des polymères s'élevant à 100% en poids;
- une couche de séparation de la membrane interne, poreuse, de 0,1 à 2 »m d'épaisseur, une limite de filtration pour les molécules de poids moléculaire entre 30 000 et 40 000 daltons et une structure de protection, enveloppant cette couche de séparation, franchement poreuse, de type spongieux, et
- une perméabilité hydraulique de 22,5 à 450 ml/h x m² x mbar et un pouvoir de fixation de l'eau à l'état sec de 3 à 10% en poids.

2. Membrane de fibres creuses suivant la revendication 1, caractérisée par :
- une clairance conformément à DIN 58 352 de 200 à 290 ml/min pour l'urée, 200 à 250 ml/min pour la créatinine et le phosphate, 110 à 150 ml/min pour la vitamine B₁₂ et 50 à 120 ml/min pour l'inuline pour un flux sanguin de 300 ml/min et une surface de membrane active de 1,25 m², et
- des coefficients de filtration de 1,0 pour la vitamine B₁₂, environ 0,99 pour l'inuline, 0,5 à 0,6 pour la myoglobine et inférieur à 0,005 pour l'albumine humaine.

3. Membrane de fibres creuses suivant les revendications 1 et 2, caractérisée en ce qu'elle montre un pouvoir de fixation de l'eau de 6 à 8% en poids à l'état sec.

4. Membrane de fibres creuses suivant l'une quelconque des revendications 1 à 3, caractérisée en ce qu'elle montre une clairance conformément à DIN 58 352 avec une vitesse de flux sanguin de 300 ml/min, pour l'urée d'environ 270 ml/min, pour la créatinine et le phosphate d'environ 230 ml/min, pour la vitamine B₁₂ d'environ 140 ml/min et pour l'inuline d'environ 90 ml/min.

5. Membrane de fibres creuses suivant l'une quelconque des revendications 1 à 4, caractérisée en ce que le premier polymère hydrophobe est une polyarylsulfone, un polycarbonate, un polyamide, un poly(chlorure de vinyle), un polymère d'acide acrylique modifié, un polyéther, un polyuréthanne ou un copolymère de ceux-ci.

6. Membrane de fibres creuses suivant la revendication 5, caractérisée en ce que la polyarylsulfone est une polysulfone et/ou une polyéthersulfone.

7. Membrane de fibres creuses suivant l'une quelconque des revendications 1 à 6, caractérisée en ce que le second polymère est une polyvinylpyrrolidone, un polyéthylènelycol, un poly(monoester de glycol), un copolymère de polyéthylèneglycol avec du polypropylènelycol, un dérivé de cellulose soluble dans l'eau ou un polysorbate.

8. Membrane de fibres creuses suivant la revendication 7, caractérisée en ce que le second polymère est la polyvinylpyrrolidone.

9. Membrane de fibres creuses suivant la revendication 8, caractérisée en ce que la polyvinylpyrrolidone montre un poids moléculaire de 10 000 à 450 000.

10. Procédé de préparation d'une membrane de fibres creuses asymétriques, semi-perméable pour l'hémodialyse suivant l'une quelconque des revendications 1 à 9, comprenant l'utilisation d'un premier polymère organique hydrophobe et d'un second polymère hydrophile, caractérisé en ce qu'une solution de polymère à 12 à 20% en poids du premier polymère et à 2 à 10% en poids du second polymère, avec un solvant résiduel polaire aprotique, d'une viscosité dans l'intervalle de 500 à 3000 cP, de préférence de 1500 à 2500 cP, est extrudée au travers d'une buse circulaire, qu'en même temps, un milieu de précipitation, constitué d'un solvant pour le premier polymère formant la fibre et d'au moins 35% en poids d'un non-solvant pour le polymère formant la fibre, est introduit dans l'extrudat, de telle manière que le rapport volumique du milieu de précipitation devant sortir et de l'extrudat correspond au rapport entre la surface de la section transversale du canal creux et la surface de la section transversale de la solution de polymère à la tête de la buse, que l'extrudat est précipité complètement du milieu de précipitation de l'intérieur vers l'extérieur avant la rencontre avec le liquide de lavage, et ensuite que la fraction du second polymère éliminée du milieu de précipitation et le solvant de la solution de polymère sont lavés dans le liquide de lavage et ensuite que la fibre creuse formée est séchée.

11. Procédé suivant la revendication 10, caractérisé en ce que le solvant utilisé est le diméthylacétamide, le diméthylformamide, le diméthylsulfoxyde, la N-méthylpyrrolidone ou un mélange de ceux-ci.

12. Procédé suivant les revendications 10 et 11, caractérisé en ce que les rapports des volumes utilisés de milieu de précipitation et de solution à filer sont dans un rapport de 1:0,5 à 1:1,25.

13. Procédé suivant l'une quelconque des revendications 10 à 12, caractérisé en ce que la vitesse de sortie de l'extrudat de la buse circulaire et la vitesse de décantation de la fibre creuse précipitée sont en accord.

14. Procédé suivant l'une quelconque des revendications 10 à 13, caractérisé en ce qu'une petite addition d'eau est incorporée au solvant ou au mélange de solvants polaires, aprotiques.
